# EUROPÄISCHE PATENTSCHRIFT

(11) **EP 1 129 755 B1**
(45) Veröffentlichungstag und Bekanntmachung des Hinweises auf die Patenterteilung: **24.10.2001**
(21) Anmeldenummer: 00110619.4
(22) Anmeldetag: 18.05.2000
(51) Int. Cl.: B01D 25/00, B01D 25/176, B01D 39/08

(54) **Filtertuch und Verfahren zu seiner Herstellung**
Filter cloth and method for manufacturing same
Toile filtrante et méthode de sa fabrication

(43) Veröffentlichungstag der Anmeldung: 05.09.2001
(73) Patentinhaber: Sefar AG, 8803 Rüschlikon (CH)
(72) Erfinder: Müller, Hans Rudolf, 8028 Zürich (CH); Maurer, Christoph, 8001 Zürich (CH)
(74) Vertreter: Wunderlich, Rainer, Dipl.-Ing.

(56) Entgegenhaltungen:
- EP-A- 0 521 512
- DE-B- 1 003 185
- PATENT ABSTRACTS OF JAPAN vol. 1996, no. 09, 30. September 1996 (1996-09-30) & JP 08 115713 A (TOYO UMPANKI CO LTD), 7. Mai 1996 (1996-05-07)
- PATENT ABSTRACTS OF JAPAN vol. 1998, no. 06, 30. April 1998 (1998-04-30) & JP 10 043529 A (SHIKIBO LTD), 17. Februar 1998 (1998-02-17)

## Beschreibung

Die Erfindung betrifft ein Filtertuch für eine Filterpresse, mit einem Filtrationsbereich, durch welchen Filtrat in ein Filterelement der Filterpresse gelangen kann, und einem Bordürenbereich, welcher zur Anlage an einem Rand des Filterelementes vorgesehen ist. Weiterhin betrifft die Erfindung ein Verfahren zur Herstellung des Filtertuches für eine Filterpresse.

Ein gattungsgemäßer Stand der Technik geht beispielsweise aus der EP-A-0 521 512 oder der DE-A-1 003 185 hervor. Diese bekannten Filtertücher sind über ihre gesamte Fläche mit einer einheitlichen Struktur gewebt.

Eine Filterpresse ist eine diskontunierlich arbeitende Filtrationsvorrichtung, welche vor allem in der Grundstoff-, Nahrungsmittel-, pharmazeutischen und chemischen Industrie eingesetzt wird. Die Filterpresse besteht in der Regel aus einer größeren Anzahl parallel geschalteter, plattenförmiger Filterelemente, zwischen denen Filtertücher angeordnet sind. Die Filterelemente können nicht nur plattenförmig sein, sondern auch eine andere Form aufweisen. Das Plattenpaket wird an den Stirnseiten durch eine feste Joch- oder Kopfplatte und eine bewegliche Druckplatte begrenzt. Über die Druckplatte werden die plattenförmigen Filterelemente, welche aus Metall, Kunststoff oder einem anderen geeigneten Werkstoff bestehen, aneinandergepresst und dabei die Filterpresse verschlossen. Anschließend wird eine zu filtrierende Suspension in die Filterpresse eingeleitet, wobei Filtrat unter Bildung eines Filterkuchens an dem Filtertuch dieses durchdringt und über entsprechende Kanäle an dem plattenförmigen Filterelement abgeleitet wird. Zum Entfernen eines gebildeten Filterkuchens wird die axiale Spannkraft gelöst und die plattenförmigen Filterelemente auseinandergefahren. Der gebildete Filterkuchen an den einzelnen Filtertüchern wird abgeworfen oder über eine Rakeleinrichtung abgestreift.

Verfahrensbedingt muss die axiale Kraft zum Aneinanderpresen der Filterelemente so hoch sein, dass diese den Befülldruck der zu filtrierenden Suspension deutlich übersteigt. Das eingesetzte Filtertuch für eine Filterpresse hat dabei nicht nur die Funktion eines Filtermediums, sondern dient auch als eine Dichtung entlang des Filterelementrandes, an welchem die angrenzenden Filterelemente gegeneinander gepresst werden. Damit diese Dichtfunktion insbesondere an der Kontaktfläche Filterelementrand/Filtertuch ausreichend gewährleistet ist, muss das Filtertuch eine ausreichende Verformbarkeit aufweisen, damit Flüssigkeitsdurchtritte unterbunden werden.

Demgegenüber wird im Bereich der Filtrationsfläche des Filtertuches eine möglichst formstabile, robuste Filtertuchstruktur gewünscht.

Es ist bekannt, ein Filtertuch aus Monofil-Garnen, welche auch als Kunststoffdrähte bezeichnet werden, zu weben. Allerdings ist ein Gewebe aus Monofil-Garnen für ein Abdichten der Ränder der Filterelemente nicht geeignet, da sich die drahtähnlichen Garne unter dem axialen Anpressdruck nicht ausreichend elastisch verformen und bei längerer Betriebsbelastung zum Brechen neigen.

Aus diesem Grund werden bei Filtertüchern für Filterpressen Gewebe aus Multifil-Garnen eingesetzt. Derartige Multifil-Garne, unter denen nachfolgend auch Stapelfaser-Garne verstanden werden, bestehen jeweils selbst aus einer Vielzahl von Fasern, wodurch eine bessere Verformbarkeit unter Druck und damit eine gewünschte Abdichtwirkung gegeben ist. Nachteilig an derartigen Geweben aus Multifil-Garnen ist jedoch, dass sich im Filtrationsbereich Feststoffanlagerungen zwischen den einzelnen Fasern eines Multifil-Garnes bilden und derartige Gewebe nach einer relativ kurzen Betriebszeit verfilzen und/oder verstopfen. Filtertücher aus Multifil-Garnen müssen daher bei einem Einsatz an einer Filterpresse relativ häufig gewechselt oder gereinigt werden, was den Nutzungsgrad einer Filterpresse reduziert und mit entsprechenden Kosten für den Ersatz der Filtertücher verbunden ist.

Der Erfindung liegt die **Aufgabe** zugrunde, ein Filtertuch zu schaffen, welches einen besonders wirtschaftlichen Betrieb einer Filterpresse ermöglicht. Eine weitere Aufgabe ist es, ein wirtschaftliches Verfahren zur Herstellung eines solchen Filtertuches bereitzustellen.

Der erste Teil der Aufgabe wird durch ein Filtertuch mit den Merkmalen des Anspruchs 1 gelöst. Der zweite Teil der Aufgabe wird erfindungsgemäß durch ein Verfahren mit den Merkmalen des Anspruchs 8 gelöst. Bevorzugte Ausführungsformen der Erfindung sind in den jeweiligen abhängigen Ansprüchen angegeben.

Das erfindungsgemäße Filtertuch ist dadurch gekennzeichnet, dass der Filtrationsbereich ein Gewebe aufweist, welches sich von dem des Bordürenbereiches unterscheidet, dass der Filtrationsbereich überwiegend aus Monofil-Garnen gewebt ist und dass in dem Bordürenbereich überwiegend Multifil-Garne verwebt sind.

Auf diese Weise werden bei dem erfindungsgemäßen Filtertuch die jeweiligen Vorteile eines Monofil-Gewebes und eines Multifil-Gewebes miteinander vereint. Durch die Verwendung von Monofil-Garnen im Filtrationsbereich ist ein besonders robustes und damit langlebiges Filtermedium selbst bei den relativ rauhen Betriebsbedingungen in einer Filterpresse sichergestellt. Aufgrund der glatten Garnoberfläche des Monofil-Garnes wird ein zuverlässiges, praktisch vollständiges Abwerfen des Filterkuchens vom Filtrationsbereich gewährleistet. Zudem gewährt das Monofil-Gewebe eine hohe Scherfestigkeit und eine hervorragende Formstabilität. Hingegen gewährt die Verwendung von Multifil-Garnen im Bordürenbereich, welcher an dem vorstehenden Rand des Filterelementes zur Anlage kommt, eine ausreichende Verformbarkeit, was für eine gute Dichtfunktion wesentlich ist. Während bei herkömmlichen Multifil-Filtertüchern aufgrund der Berücksichtigung der Dichtfunktion die Filtertuchöffnungen einheitlich relativ fein gewählt werden mussten, erlaubt das erfindungsgemäße Filtertuch eine hohe Gestaltungsfreiheit bei der Öffnungsgröße im Filtrationsbereich. Die Öffnungen können vorzugsweise in einem Größenbereich von 10 µm bis 100µm liegen. Das Filtertuch kann auch an anderen Filtern zum Einsatz kommen, bei welchen ein ähnliches Problem einer gleichzeitigen Filter- und Dichtfunktion besteht.

Grundsätzlich können im Filtrationsbereich in einem gewissen Umfang noch Multifil-Garne vorgesehen sein. Ein besonders robustes und langlebiges Filtertuch für eine Filterpresse wird erfindungsgemäß aber dadurch erreicht, dass der Filtrationsbereich ausschließlich aus Monofil-Garnen gewebt ist.

Im Bordürenbereich können auch nur Multifil-Garne vorgesehen sein. Eine Weiterbildung der Erfindung besteht darin, dass in dem Bordürenbereich sowohl Multifil-Garne als auch Monofil-Garne verwebt sind. Durch die Kombination der beiden Garne im Bordürenbereich wird erreicht, dass einerseits eine ausreichende Verformbarkeit und Elastizität durch die Multifil-Garne gewährleistet ist, während andererseits die Monofil-Garne eine ausreichende Stabilität gegen ein Einreißen gewähren. Für eine gute Dichtfunktion sind bevorzugt überwiegend Multifil-Garne im Bordürenbereich vorgesehen.

Um bei der vorgenannten Ausführungsform eine ausreichende Dichtfunktion sicherzustellen, ist bevorzugt, dass im Bordürenbereich die Multifil-Garne überwiegend an der Seite des Filtertuches angeordnet sind, welche dem Filterelement zugewandt ist. Denn problematisch hinsichtlich der Abdichtung ist insbesondere die Kontaktfläche zwischen dem Rand des Filterelementes und dem aufliegenden Filtertuch. Beim Aneinanderpressen von zwei gegenüberliegenden Filterelementen mit darauf aufgespannten Filtertüchern ist die Kontaktfläche Filtertuch/Filtertuch kaum problematisch, da selbst beim Aneinanderpressen von zwei Monofil-Geweben eine ausreichende Dichtigkeit gegen einen Flüssigkeitsdurchtritt erreicht wird. Umgekehrt sind im Filtrationsbereich die Monofil-Garne überwiegend an der Filterkuchenseite, um ein gutes, weitgehend rückstandsloses Abwerfen des Filterkuchens sicherzustellen.

Gemäß einer weiteren Ausführungsform der Erfindung ist es vorgesehen, dass das Filtertuch als ein Doppellagengewebe ausgebildet ist, dass eine untere, dem Filterelement zugewandte Gewebelage ein Stützgewebe ist und dass eine obere Gewebelage als eine für die Filtration wirksame Lage ausgebildet ist. Die obere Gewebelage kann dabei so eingestellt sein, dass eine gewünschte Öffnungsgröße zum Durchtritt für das Filtrat gegeben ist. Hierzu können relativ feine Garne verwendet werden, während die untere Gewebelage aus einem grobmaschigen Gewebe mit relativ starken Garnen herstellbar ist.

Erfindungsgemäß wird die Nutzungsdauer des Filtertuches noch dadurch erhöht, dass ein in Auswurfrichtung eines gebildeten Filterkuchens liegender Bordürenbereich an seiner vom Filterelement abgewandten Oberseite überwiegend oder sogar ausschließlich Monofil-Garne aufweist. Beim Abwerfen des Filterkuchens über den Randbereich besteht das Problem, dass Filterkuchenreste an dem Filtertuch im Randbereich hängen bleiben können. Diese Reste stellen beim erneuten Schliessen der Filterpresse eine außerordentliche Belastung des Filtertuches dar, so dass derartige Filterkuchenreste häufig die Ursache für Beschädigungen des Filtertuches sind. Ein Gewebe aus Monofil-Garnen mit ihren glatten Oberseiten sorgt für ein zuverlässiges Abgleiten des Filterkuchens und reduziert damit die Gefahr von Beschädigungen des Filtertuches. Das Filtertuch kann in einer eckigen, runden oder sonstigen Form hergestellt sein. Für sogenannte Turmfilterpressen mit schrittweise umlaufendem Filtertuchband kann das Filtertuch als ein ringförmig geschlossenes Band mit einer Vielzahl von Querbordüren ausgebildet sein.

Das erfindungsgemäße Verfahren zur Herstellung eines Filtertuches für eine Filterpresse ist dadurch gekennzeichnet, dass ein Filtrationsbereich unterschiedlich zu dem Bordürenbereich gewebt wird, dass der Filtrationsbereich überwiegend aus Monofil-Garnen gewebt wird und dass in dem Bordürenbereich überwiegend Multifil-Garne verwebt werden. Auf diese Weise lässt sich das vorbeschriebene erfindungsgemäße Filtertuch wirtschaftlich herstellen.

Bei einer Weiterbildung dieses Verfahrens ist es besonders wirtschaftlich, dass das Filtertuch aus einer Gewebebahn konfektioniert wird und dass die Gewebebahn mit einer Breite hergestellt wird, die einer gewünschten Seitenlänge des Filtertuches entspricht. Das Filtertuch für eine Filterpresse mit vorgegebenen Dimensionen des Filterelementes kann so gewebt, ausgerüstet, d.h. beispeilsweise thermisch behandelt und/oder gereckt, und durch einfaches Ablängen der Gewebebahn erzeugt werden.

Dabei ist es bevorzugt, dass entlang der Randkanten der Gewebebahn entsprechend dem gewünschten Bordürenbereich des Filtertuches Multifil-Garne als Kettfäden eingesetzt werden. Im Gegensatz dazu werden zum Bilden des Filtrationsbereiches in diesem Abschnitt Monofil-Garne als Kettfäden verwendet. In diesen Bereichen werden als Schussfäden ebenfalls Monofil-Garne eingesetzt.

Gemäß einer weiteren Ausführungsform des erfindungsgemäßen Verfahrens ist es vorgesehen, dass entsprechend der anderen Seitenlänge des viereckigen Filtertuches in quer verlaufenden Abschnitten der Gewebebahn Multifil-Garne als Schussfäden zur Bildung des Bordürenbereiches eingesetzt werden. Mit diesem Verfahren lässt sich das erfindungsgemäße Filtertuch mit den speziell ausgebildeten Filterbereichen und den Bordürenbereichen durch Weben, Ausrüsten und Konfektionieren einfach herstellen.

Die Erfindung wird weiter anhand von bevorzugten Ausführungsbeispielen erläutert, welche schematisch in den beigefügten Zeichnungen dargestellt sind.

In den Zeichnungen zeigen:
- Fig. 1: eine Teilquerschnittsansicht durch eine Filterpresse im Filtrationsbetrieb;
- Fig. 2: eine perspektivische Ansicht einer Filterpresse mit auseinandergefahrenen Filterelementen;
- Fig. 3: eine Draufsicht auf eine Gewebebahn zur Herstellung eines Filtertuches nach der Erfindung und
- Fig. 4: eine Teilquerschnittsansicht durch ein Gewebe eines erfindungsgemäßen Filtertuches.

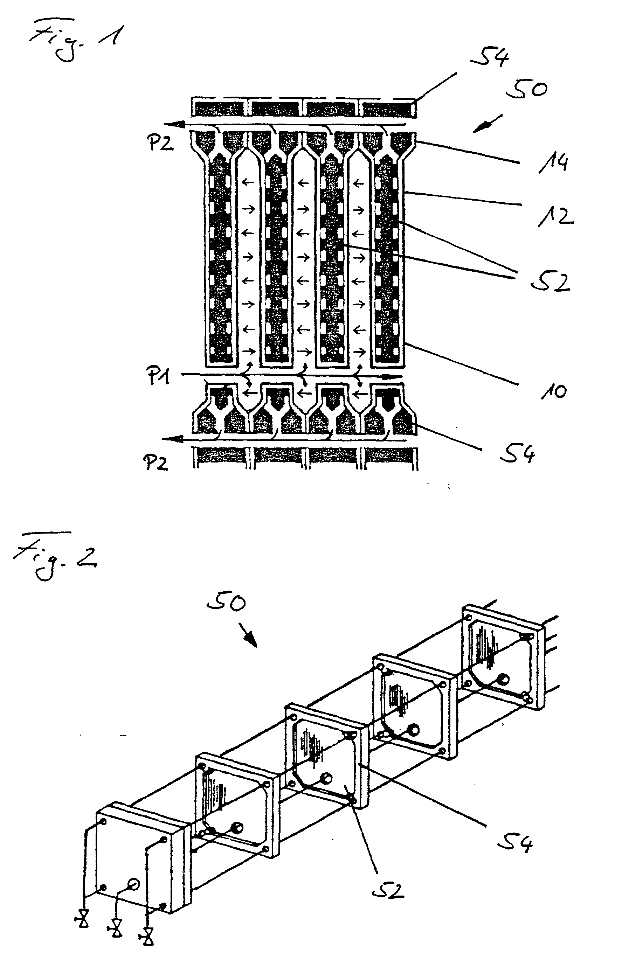

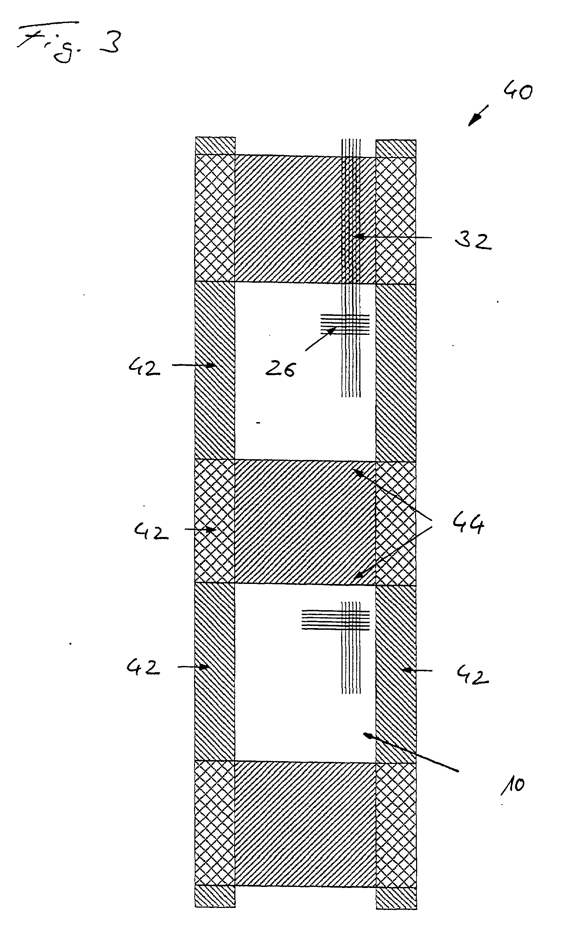

Das grundsätzliche Funktionsprinzip einer Filterpresse 50 sowie die Anordnung des erfindungsgemäßen Filtertuches 10 wird schematisch im Zusammenhang mit den Figuren 1 und 2 erläutert. Die Filterpresse 50 umfasst mehrere plattenförmige Filterelemente 52, welche einen mittleren, mit Ablaufkanälen versehenen Filtrationsabschnitt aufweisen, welcher von einem rahmenartigen, vorstehenden Rand 54 umschlossen ist. Die Anordnung der Ablaufkanäle sowie des Randes 54 an den Filterelementen 52 ist beidseitig vorgesehen. Ein Filtertuch 10 wird auf beiden Seiten des Filterelementes 52 angeordnet, wobei ein einstückiges Filtertuch 10 durch Umschlag auf einer Seites des Filterelementes 52 verwendbar ist.

Für den Filtrationsbetrieb wird die Filterpresse 50 geschlossen, indem die parallel angeordneten Filterelemente 52 axial gegeneinander gepresst werden. Die einzelnen Filterelemente 52 grenzen mit ihren Rändern 54 aneinander an, wobei das am Rand 54 aufliegende Filtertuch 10 die Anlagefläche abdichtet. Entsprechend dem Pfeil P1 kann in den zwischen den Filterelementen 52 bestehenden Hohlraum eine zu filtrierende Suspension unter Druck eingeleitet werden.

Unter Ausbildung eines Filterkuchens an dem Filtrationsbereich 12 des Filtertuches 10 durchdringt Filtrat das Filtertuch 10 und läuft über die Ablaufkanäle in den Filterelementen 52 und zentralen Kanälen entsprechend dem Pfeil P2 ab. Bei Erreichen einer bestimmten Filterkuchenhöhe wird die Filterpresse 50 entsprechend Figur 2 geöffnet, wobei der auf dem Filtertuch 10 gebildete Filterkuchen nach unten abfällt oder abgestreift wird.

Um den unterschiedlichen Bedingungen im Filtrationsbetrieb gerecht zu werden, weist das erfindungsgemäße Filtertuch 10 in seinem Bordürenbereich 14, welches an dem erhöhten Rand 54 des Filterelementes 52 aufliegt, ein Gewebe auf, welches überwiegend aus Multifil-Garnen besteht. Hingegen weist das Filtertuch 10 in seinem Filtrationsbereich 12, dem sogenannten Filtrationsfenster, ein Gewebe auf, welches überwiegend aus Monofil-Garnen hergestellt ist.

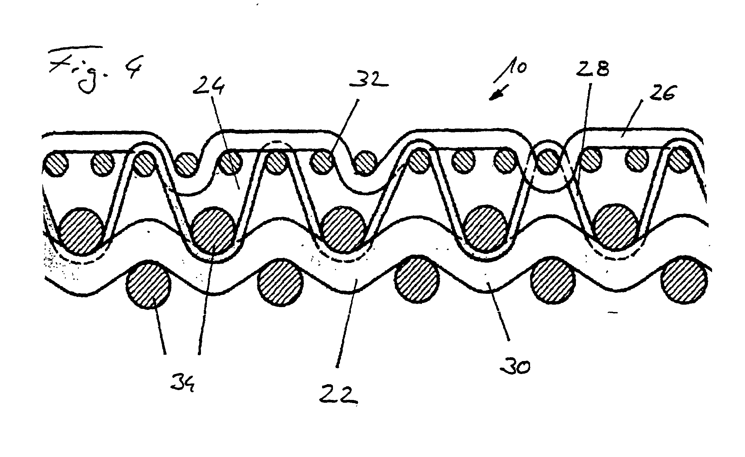

Die Herstellung eines erfindungsgemäßen Filtertuches 10 wird im Zusammenhang mit Fig. 3 erläutert. Das Filtertuch 10 wird aus einer Gewebebahn 40 konfektioniert. Die Gewebebahn 40 wird nach einer üblichen Webmethode durch Verweben von längs verlaufenden Kettfäden mit quer verlaufenden Schussfäden hergestellt. Die Gewebebahn 40 wird entsprechend einer gewünschten Breite des Filtertuches 10 gewebt und ausgerüstet, wobei entsprechend dem gewünschten Bordürenbereich 14 entlang den Randkanten 42 Monofil-Garne als Kettfäden verwendet werden. In einem quer verlaufenden Abschnitt 44, welcher ebenfalls als Bordürenbereich 14 als sogenannte Querbordüre des zu konfektionierenden Filtertuches 10 dienen soll, werden zusätzlich Multifil-Garne als Schussfäden eingesetzt. Die Breite des quer verlaufenden Abschnittes 44 ist für einen Umschlag um den Rand 54 des Filterelementes 52 oder etwa doppelt so groß wie die gewünschte Breite des Bordürenbereiches 14 ausgelegt. Im letzteren Fall würde ein Schneiden des Filtertuches 10 von der Gewebebahn 40 in der Mitte des Abschnittes 44 erfolgen, so dass abfallfrei die Filtertücher 10 aus der Gewebebahn 40 konfektionierbar sind. In den anderen Bereichen der Gewebebahn 40 werden vornehmlich Monofil-Garne sowohl als Kettfäden als auch als Schussfäden verwendet.

In Fig. 4 ist eine Teilquerschnittsansicht durch ein erfindungsgemäßes Filtertuch 10 mit einem Doppellagengewebe dargestellt. Dieses Doppellagengewebe besteht aus einem unteren, dem Filterelement zugewandten Stützgewebe 22, während auf der sogenannten Filterkuchen- oder Satinseite ein feinmaschigeres Gewebe als filtrationswirksame Lage 24 vorgesehen ist. Insgesamt sind ein oberer Schussfaden 26, ein mittlerer Bindefaden 28 sowie ein unterer Schussfaden vorgesehen, welche mit feinen, oberen Kettfäden 32 sowie unteren größeren Kettfäden 34 verwebt sind.

Die oberen Schussfäden 26 sowie die oberen feinen Kettfäden 32 bilden die filtrationswirksame Lage 24, wobei der obere Schussfaden 26 stets ein Monofil-Garn ist. Entsprechend der Anordnung in einem Bordürenbereich 14 oder einem Filtrationsbereich 12 können die oberen Kettfäden 32 Multifil-Garne oder Monofil-Garne sein. Das untere Stützgewebe 22 wird durch die unteren Kettfäden 34 und die unteren Schussfäden 30 gebildet, wobei diese Fäden in einem Bordürenbereich 14 Multifil-Garne sein können. Die mittleren Bindefäden 28 dienen für eine zuverlässige Verbindung der filtrationswirksamen Lage 24 mit dem darunter liegenden Stützgewebe 22.

## Patentansprüche

1. Filtertuch für eine Filterpresse (50), mit einem Filtrationsbereich (12), durch welchen Filtrat in ein Filterelement (52) der Filterpresse (50) gelangen kann, und einem Bordürenbereich (14), welcher zur Anlage an einem Rand (54) des Filterelementes (52) vorgesehen ist,
**dadurch gekennzeichnet,**
**dass** der Filtrationsbereich (12) ein Gewebe aufweist, welches sich von dem des Bordürenbereiches (14) unterscheidet,
**dass** der Filtrationsbereich (12) überwiegend aus Monofil-Garnen gewebt ist und
**dass** in dem Bordürenbereich (14) überwiegend Multifil-Garne verwebt sind.

2. Filtertuch nach Anspruch 1,
**dadurch gekennzeichnet,**
**dass** der Filtrationsbereich (12) ausschließlich aus Monofil-Garnen gewebt ist.

3. Filtertuch nach Anspruch 1 oder 2,
**dadurch gekennzeichnet,**
**dass** in dem Bordürenbereich (14) sowohl Multifil-Garne als auch Monofil-Garne verwebt sind.

4. Filtertuch nach Anspruch 3,
**dadurch gekennzeichnet,**
**dass** im Bordürenbereich (14) die Multifil-Garne überwiegend an der Seite des Filtertuches (10) angeordnet sind, welche dem Filterelement (52) zugewandt ist.

5. Filtertuch nach einem der Ansprüche 1 bis 4,
**dadurch gekennzeichnet,**
**dass** dieses als ein Doppellagengewebe ausgebildet ist, dass eine untere, dem Filterelement (52) zugewandte Gewebelage ein Stützgewebe (22) ist und
**dass** eine obere Gewebelage als eine für die Filtration wirksame Lage (24) ausgebildet ist.

6. Filtertuch nach einem der Ansprüche 1 bis 5,
**dadurch gekennzeichnet,**
**dass** ein in Abwurfrichtung eines gebildeten Filterkuchens liegender Bordürenbereich (14) an seiner vom Filterelement (52) abgewandten Oberseite überwiegend Monofil-Garne aufweist.

7. Filtertuch nach einem der Ansprüche 1 bis 6,
**dadurch gekennzeichnet,**
**dass** im Filtrationsbereich (12) die Monofil-Garne überwiegend an der Seite des Filterkuchens (10) angeordnet sind, welche von dem Filterelement (52) abgewandt ist.

8. Verfahren zur Herstellung eines Filtertuches (10) für eine Filterpresse (50) nach einem der Ansprüche 1 bis 7,
**dadurch gekennzeichnet,**
**dass** ein Filtrationsbereich (12) unterschiedlich zu dem Bordürenbereich (14) gewebt wird,
**dass** der Filtrationsbereich (12) überwiegend aus Monofil-Garnen gewebt wird und
**dass** in dem Bordürenbereich (14) überwiegend Multifil-Garne verwebt werden.

9. Verfahren nach Anspruch 8,
**dadurch gekennzeichnet,**
**dass** das Filtertuch (10) aus einer Gewebebahn (40) konfektioniert wird und
**dass** die Gewebebahn (40) mit einer Breite hergestellt wird, die einer gewünschten Seitenlänge des Filtertuches (10) entspricht.

10. Verfahren nach Anspruch 9,
**dadurch gekennzeichnet,**
**dass** entlang der Randkante (42) der Gewebebahn (40) entsprechend dem gewünschten Bordürenbereich (14) des Filtertuches (10) Multifil-Garne als Kettfäden eingesetzt werden.

11. Verfahren nach Anspruch 10,
**dadurch gekennzeichnet,**
**dass** entsprechend der anderen Seitenlänge des rechteckigen Filtertuches (10) in quer verlaufenden Abschnitten (44) der Gewebebahn (40) Multifil-Garne als Schussfäden zur Bildung des Bordürenbereiches (14) eingesetzt werden.

## Claims

1. Filter cloth for a filter press (50), having a filtration area (12) through which filtrate can pass into a filter element (52) of the filter press (50), and a border area (14) which is provided for application to an edge (54) of the filter element (52), **characterized in that** the filtration area (12) has a fabric differing from that of the border area (14), that the filtration area (12) is preponderantly woven from monofilament yarns and that preponderantly multifilament yarns are woven in the border area (14).

2. Filter cloth according to claim 1, **characterized in that** the filtration area (12) is exclusively woven from monofilament yarns.

3. Filter cloth according to claim 1 or 2, **characterized in that** in the border area (14) are woven both multifilament yarns and monofilament yarns.

4. Filter cloth according to claim 3, **characterized in that** in the border area (14) the multifilament yarns are preponderantly located on the side of the filter cloth (10) facing the filter element (52).

5. Filter cloth according to one of the claims 1 to 4, **characterized in that** it is constructed as a double layer fabric, that a lower fabric layer facing the filter element (52) is a backing fabric (22) and that an upper fabric layer is constructed as a filtration-active layer (24).

6. Filter cloth according to one of the claims 1 to 5, **characterized in that** a border area (14) located in the discharge direction of a filter cake formed has on its top side remote from the filter element (52) preponderantly monofilament yarns.

7. Filter cloth according to one of the claims 1 to 6, **characterized in that** in the filtration area (12) the monofilament yarns are preponderantly located on the side of the filter cake (10) which is remote from the filter element (52).

8. Method for the manufacture of a filter cloth (10) for a filter press (50) according to one of the claims 1 to 7, **characterized in that** a filtration area (12) is woven differently from the border area (14), that the filtration area (12) is preponderantly woven from monofilament yarns and that in the border area (14) preponderantly multifilament yarns are woven.

9. Method according to claim 8, **characterized in that** the filter cloth (10) is manufactured from a length of fabric (40), which is produced with a width corresponding to a desired side length of the filter cloth (10).

10. Method according to claim 9, **characterized in that** along the marginal edge (42) of the length of fabric (40) and corresponding to the desired border area (14) of the filter cloth (10), multifilament yarns are used as warp threads.

11. Method according to claim 10, **characterized in that** in accordance with the other side length of the rectangular filter cloth (10) in transversely directed portions (44) of the length of fabric (40) use is made of multifilament yarns as weft threads for forming the border area (14).

## Revendications

1. Tissu filtrant pour un filtre-presse (50), avec une zone de filtration (12) à travers laquelle un filtrat peut arriver dans un élément filtrant (52) du filtre-presse (50), et une zone de bordure (14), qui est prévue pour se mettre en appui contre un bord (54) de l'élément filtrant (52),
***caractérisé en ce que*** la zone de filtration (12) présente un tissu qui diffère de celui de la zone de bordure (14),
***en ce que*** la zone de filtration (12) est tissée principalement à partir de fils monobrins, **et**
***en ce que*** principalement des fils multibrins sont tissés dans la zone de bordure (14).

2. Tissu filtrant selon la Revendication 1, ***caractérisé en ce que*** la zone de filtration (12) est tissée exclusivement à partir de fils monobrins.

3. Tissu filtrant selon la Revendication 1 ou 2*,* ***caractérisé en ce qu'à*** la fois des fils multibrins et des fils monobrins sont tissés dans la zone de bordure (14).

4. Tissu filtrant selon la Revendication 3, ***caractérisé en ce que,*** dans la zone de bordure (14), les fils multibrins sont placés principalement du côté du tissu filtrant (10) qui est orienté vers l'élément filtrant (52).

5. Tissu filtrant selon l'une quelconque des Revendications 1 à 4, ***caractérisé en ce que*** celui-ci est conformé en tissu double couche, ***en ce qu***'une couche de tissu inférieure orientée vers l'élément filtrant (52) est un tissu de soutien (22) ***et en ce qu***'une couche de tissu supérieure est conformée en couche (24) active pour la filtration.

6. Tissu filtrant selon l'une quelconque des Revendications 1 à 5, ***caractérisé en ce qu'une*** zone de bordure (14) située dans la direction d'expulsion d'un gâteau de filtre formé présente principalement des fils monobrins sur sa face supérieure opposée à l'élément filtrant (52).

7. Tissu filtrant selon l'une quelconque des Revendications 1 à 6, ***caractérisé en ce que,*** dans la zone de filtration (12), les fils monobrins sont placés principalement sur le côté du gâteau de filtre (10) qui est opposé à l'élément filtrant (52).

8. Procédé de fabrication d'un tissu filtrant (10) pour un filtre-presse (50) selon l'une quelconque des Revendications 1 à 7, ***caractérisé en ce qu***'une zone de filtration (12) est tissée de manière différente de la zone de bordure (14),
***en ce que*** la zone de filtration (12) est tissée principalement à partir de fils monobrins, **et**
***en ce que*** principalement des fils multibrins sont tissés dans la zone de bordure (14).

9. Procédé selon la Revendication 8, ***caractérisé en ce que*** le tissu filtrant (10) est confectionné à partir d'une bande de tissu (40) ***et***
***en ce que*** la bande de tissu (40) est fabriquée dans une largeur qui correspond à une longueur de côté souhaitée du tissu filtrant (10).

10. Procédé selon la Revendication 9, ***caractérisé en ce que,*** le long du bord (42) de la bande de tissu (40), des fils multibrins sont employés comme fils de chaîne de manière correspondante à la zone de bordure souhaitée (14) du tissu filtrant (10).

11. Procédé selon la Revendication 10, ***caractérisé en ce que,*** conformément à l'autre longueur de côté du tissu filtrant rectangulaire (10), des fils multibrins sont employés comme fils de trame dans des sections transversales (44) de la bande de tissu (10) pour former la zone de bordure (14).
